# EUROPÄISCHE PATENTSCHRIFT

(11) **EP 2 290 801 B1**
(45) Veröffentlichungstag und Bekanntmachung des Hinweises auf die Patenterteilung: **21.10.2015**
(21) Anmeldenummer: 10183752.4
(22) Anmeldetag: 18.01.2005
(51) Int. Cl.: H02M 7/538, H05B 41/285

(54) **Überstrom- und Mittenpunktspannungserfassung**
Overload and central point voltage detection
Détection de surtension et de tension en point central

(30) Priorität: 01.03.2004 DE 102004009994
(43) Veröffentlichungstag der Anmeldung: 02.03.2011
(62) Teilanmeldung aus: 05706915.5
(73) Patentinhaber: Tridonic GmbH & Co KG, 6851 Dornbirn (AT)
(72) Erfinder: Klien, Dietmar, 6841, Mäder (AT)
(74) Vertreter: Rupp, Christian

(56) Entgegenhaltungen:
- US-A1- 2004 007 992

## Beschreibung

Die vorliegende Erfindung bezieht sich auf Wechselrichter mit Halbbrückenschaltungen, auf ein elektronisches Vorschaltgerät (EVG) für Gasentladungslampen mit einem derartigen Wechselrichter, auf Verfahren zur Überwachung des Zustands eines Wechselrichters mit einer Halbbrückenschaltung sowie auf ein Computersoftware-Programmprodukt, das derartige Verfahren unterstützt, wenn es durch einen Mikrocomputer ausgeführt wird.

Hintergrund der vorliegenden Erfindung ist beispielsweise das Anwendungsgebiet elektronischer Vorschaltgeräte. Derartige elektronische Vorschaltgeräte sind aus dem Stand der Technik gut bekannt und weisen üblicherweise einen mit Netzspannung versorgten Gleichrichter mit PFC (Power Factor Correction, Leistungsfaktor-Korrekturschaltung) auf. Die von dieser Einheit erzeugte Gleichspannung wird dann einer hochfrequent getakteten Halbbrücke zugeführt, die eine hochfrequente Wechselspannung erzeugt, die wiederum wenigstens einer angeschlossenen Gasentladungslampe zugeführt wird. Die Halbbrückenschaltung weist dabei in der Regel zwei in Serie geschaltete Schalter wie beispielsweise Leistungstransistoren auf, die von einer Steuereinheit, wie beispielsweise einem ASIC, getaktet sind.

Bei den Schaltvorgängen dieser Leistungstransistoren der Halbbrücke ist darauf zu achten, dass ein sogenanntes 'hartes Schalten' vermieden wird. 'Hartes Schalten' bedeutet dabei, dass während der Freilaufphase des Stroms durch die Halbbrücke durch die Freilaufdiode (parallel zum Schalter und ggf. und in diesen integriert) der gegenüberliegende Schalter eingeschaltet wird. Dabei kann es zu Beschädigungen des Schalters kommen.

Aus dem Stand der Technik sind dabei Ansätze bekannt, nach dem Auftreten eines solchen harten Schaltvorgangs die Halbbrücke zu deaktivieren.

Andererseits ist es aber auch beispielsweise aus der WO 00/35252 (siehe dort Fig. 1A) bekannt, den Zustand der Halbbrückenschaltung und genauer gesagt die Spannung an dem Mittelpunkt zwischen den beiden Schaltern zu überwachen, wobei dabei der entsprechende Transistor erst dann eingeschaltet wird, wenn die Freilaufphase abgeschlossen ist. Nachteil dieser Schaltung ist es indessen, dass zur Überwachung dieser Mittenpunktspannung an einer Steuereinheit, beispielsweise an derselben Steuereinheit, die auch die Schalter ansteuert, ein zusätzlicher Pin einer integrierten Schaltung belegt wird.

Die US 2004/007992 zeigt ein Verfahren gemäß dem Oberbegriff des Anspruchs 1 und einen Wechselrichten gemäß dem Oberbegriff des Anspruchs 08.

Ausgehend von diesem Stand der Technik ist es daher Aufgabe der vorliegenden Erfindung, eine effektiver gestaltete Überwachungs- und Ansteuerschaltung für eine Halbbrücke vorzuschlagen.

Diese Aufgabe wird erfindungsgemäß durch die Merkmale der unabhängigen Ansprüche gelöst. Die abhängigen Ansprüche bilden den zentralen Gedanken der vorliegenden Erfindung in besonders vorteilhafter Weise weiter.

Gemäß einem Beispiel wird dabei ermöglicht, dass der zur Überwachung der Mittenpunktspannung der Halbbrücke erforderliche Pin einer integrierten Schaltung gleichzeitig auch zur Überwachung des Stroms der Halbbrücke verwendet werden kann. Erfindungsgemäß wird dabei die Überwachungsschaltung derart ausgebildet, dass einerseits in einer Phase der Taktung der Schalter das Meßsignal an einem Pin der integrierten Schaltung als Mittenpunktspannung verwendet wird. In einer zeitlich davon getrennten Phase der Taktung der Schalter (Leistungstransistoren) kann andererseits derselbe Pin zur Bestimmung des Halbbrückenstroms verwendet werden. Der Strom durch die Halbbrücke kann dabei bspw. zur Erfassung eines Überstrom-Zustands und zur Lampenleistungsregelung verwendet werden.

Es wird daher ein Wechselrichter mit einer Halbbrückenschaltung gezeigt, die zwei in Serie geschaltete und mit Gleichspannung versorgte Schalter aufweist, an deren Mittenpunkt bei entsprechender gegenläufiger Taktung der Schaltung eine Wechselspannung bereitgestellt wird. Weiterhin ist eine Steuereinheit vorgesehen, die die Schalter taktet und ein an dem Mittenpunkt abgegriffenes Meßsignal in unterschiedlichen zeitlichen Phasen der Taktung der Schalter zur Erfassung des Stroms durch die Halbbrücke bzw. zur Erfassung der Spannung an den Mittenpunkt auswertet.

Die Steuereinheit kann dabei das Mittenpunktsignal als Strom durch die Halbbrücke auswerten, wenn nur der auf niedrigem Potential liegende Schalter der Halbbrücke geschlossen ist.

Andererseits kann die Steuereinheit das Mittenpunktsignal als Spannungswert des Mittenpunkts in einer zeitlichen Phase der Taktung der Schalter auswerten, in der wenigstens der auf niedrigerem Potential liegende Schalter geöffnet ist. Insbesondere kann die Steuereinheit das Mittenpunktsignal dabei als Spannungswert des Mittenpunkts während einer Totzeit auswerten, in der beide Schalter geöffnet sind.

Gemäß der Erfindung wird die Totzeit durch die Steuereinheit abhängig von der erfassten Mittenpunktspannung variiert, insbesondere von einer Standardeinstellung ausgehend verlängert.

Der potentialniedrigere Schalter kann mittels eines Ohm'schen Meßwiderstands mit Masse verbunden sein, wobei der Widerstandswert des Meßwiderstands wesentlich kleiner ist als der Widerstand des potentialniedrigeren Schalters im geschlossenen Zustand dieses Schalters.

Ein weiterer Ohm'scher Widerstand kann parallel zu dem potentialniedrigeren Schalter geschaltet sein, wobei das Mittenpunktsignal zwischen dem Meßwiderstand und dem potentialniedrigeren Schalter abgegriffen wird.

Ein Komparator zum Vergleich des Meßsignals mit einer Referenzspannung kann vorgesehen sein, wobei dann das Ergebnis des Vergleichs der Steuereinheit zur weiteren Auswertung zugeführt wird.

Die Steuereinheit kann beispielsweise ein ASIC sein.

Die Steuereinheit kann einen Schalter erst dann einschalten, wenn die Erfassung der Mittenpunktspannung ergeben hat, dass die Freilaufphase des Halbbrückenstroms beendet ist und somit ein spannungsloser Schaltvorgang gewährleistet ist.

Gemäß einem weiteren Aspekt der vorliegenden Erfindung ist ein elektronisches Vorschaltgerät für Gasentladungslampen mit einem derartigen Wechselrichter vorgesehen.

Schließlich bezieht sich die Erfindung auch auf Verfahren zur Überwachung des Zustands eines Wechselrichters mit einer Halbbrückenschaltung.

Weitere Merkmale, Vorteile und Eigenschaften der vorliegenden Erfindung sollen nunmehr Bezug nehmend auf die begleitenden Figuren und durch detaillierte Beschreibung unterschiedlicher Ausführungsbeispiele der vorliegenden Erfindung näher erläutert werden.
- Fig. 1a: zeigt dabei ein erstes Ausführungsbeispiel der Erfindung in dem Zustand, in dem während einer sogenannten Totzeit eine Mittenpunktspannungsmessung erfolgt,
- Fig. 1b: zeigt den Zustand des ersten Ausführungsbeispiels während einer Messung des Stroms durch die Halbbrücke,
- Fig. 2a: zeigt ein zweites Ausführungsbeispiel der vorliegenden Erfindung in dem Zustand, in dem während der Totzeit die Spannung an dem Mittenpunkt gemessen wird, und
- Fig. 2b: zeigt wiederum das zweite Ausführungsbeispiel in dem Zustand in dem der Strom durch die Halbbrücke gemessen wird.

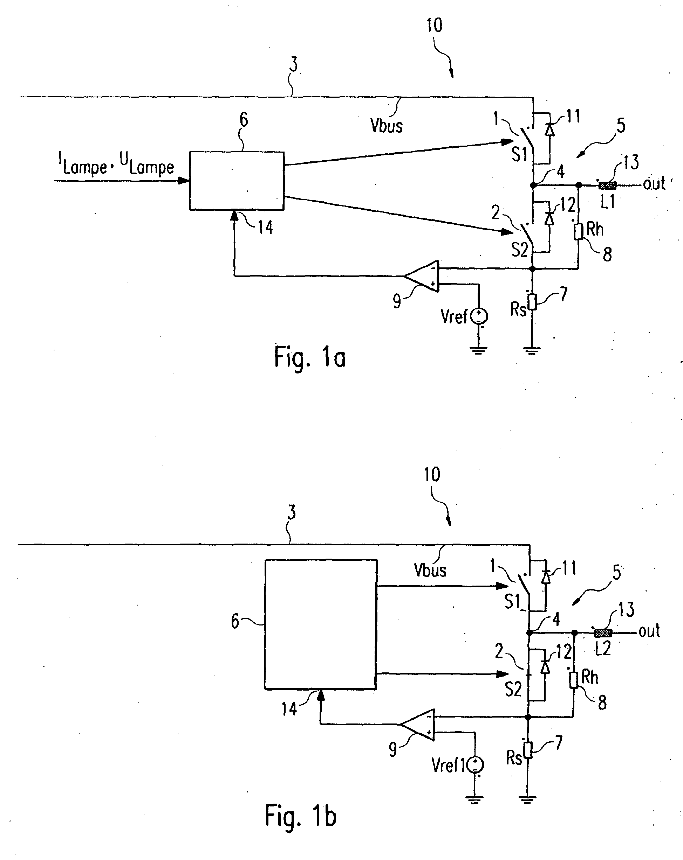

Fig. 1a zeigt ein erstes Ausführungsbeispiel der Erfindung mit einem Wechselrichter 10 mit einer Halbbrückenschaltung 5, der eine DC-Busspannung 3 zugeführt wird. Die Halbbrückenschaltung 5 weist zwei Leistungsschalter 1, 2 mit jeweils dazu parallel geschalteten Freilaufdioden 11 bzw. 12 auf. Diese Freilaufdioden 11, 12 können auch in die Schalter (Transistoren) 1, 2 integriert sein. Durch entsprechende (hochfrequente) Taktung der Schalter 1, 2 durch eine Steuereinheit 6 wird an dem Mittenpunkt 4 der Halbbrückenschaltung 5 eine (hochfrequente) Wechselspannung bereitgestellt, die beispielsweise einer Drossel 13 eines folgenden Lastkreises zugeführt wird, wobei dieser Lastkreis üblicherweise die Lampe enthält.

Aufgabe einer an diese Halbbrückenschaltung 5 angeschlossenen Überwachungsschaltung ist es einerseits ein sogenanntes hartes Schalten, d.h. ein nicht spannungsloses Schalten der Transistoren 1, 2 zu vermeiden. Die Schalter werden spannungslos geschaltet, wenn die Freilaufdioden 11, 12 im induktiven Betriebsbereich der Halbbrückenschaltung leitfähig werden, bevor die Schalter eingeschaltet werden.

Dies ist der Fall, wenn Resonanzkurve des Lastkreises ein induktives Verhalten zeigt. Dagegen ist diese Bedingung nicht mehr erfüllt, wenn der Lastkreis ein kapazitives Verhalten zeigt.

Gemäß der Erfindung wird dabei die Mittenpunktspannung in der zeitlichen Phase der Taktung der Schalter 1, 2 gemessen, in der zumindest der potentialniedrigere Schalter 2 offen ist. Insbesondere kann aber diese Mittenpunkt-Spannungsmessung während der Totzeit durchgeführt werden, während der also beide Schalter 1, 2 geöffnet sind.

Die Überwachungsschaltung weist dabei einen ersten Ohm'schen Widerstand 8 auf, der parallel zu dem potentialniedrigeren Schalter 2 geschaltet ist. Dieser erste Ohm'sche Widerstand 8 bildet mit einem Ohm'schen Meßwiderstand 7, der den potentialniedrigeren Schalter 2 mit Masse verbindet, einen Spannungsteiler. Das Spannungsteilersignal wird dann einem Komparator 9 zugeführt, der das Spannungsteilersignal mit einer vorgegebenen Referenzspannung V_{ref} vergleicht und das Vergleichssignal der Steuereinheit 6 zuführt.

Da die Steuereinheit 6 die zeitliche Taktung der Schalter 1, 2 vorgibt, kann ein eingehendes Meßsignal an dem Pin 14 eindeutig der Totzeitphase zugeordnet werden.

Anzumerken ist, dass der Widerstandswert des Ohm'schen Meßwiderstands 7 deutlich kleiner als der Schalterwiderstand des potentialniedrigeren Schalters 2 im geschlossenen Zustand (eingeschalteten Zustand) ist und beispielsweise einige mOhm betragen kann.

Während also die Mittenpunktspannungsmessung bevorzugt während der zeitlichen Dauer der Totzeit erfolgt, erfolgt die Messung des Halbbrückenstroms wie aus Fig. 1b ersichtlich dann, wenn der potentialniedrigere Schalter 2 wie durch die Steuerschaltung 6 vorgegeben, geschlossen ist. In diesem Zustand, in dem die Mittenpunktspannung etwa 0,7 Volt beträgt, wird also der Halbbrückenstrom mittels der an dem Meßwiderstand 7 anliegenden Spannung gemessen und wiederum dem Komparator 9 zugeführt.

Festzuhalten ist, dass die gleiche Schaltung in Fig. 1a und Fig. 1b unter Verwendung ein- und desselben Pins 14 der Schaltung 6 einerseits die Mittenpunktspannungsmessung in einer ersten zeitlichen Phase der Taktung der Schalter 1, 2, und andererseits die Messung des Stroms durch die Halbleiterbrücke ausführen kann.

Die Steuerschaltung 6 stellt die Totzeit, in der beide Schalter geöffnet sind, abhängig von der erfassten Mittenpunktspannung ein.

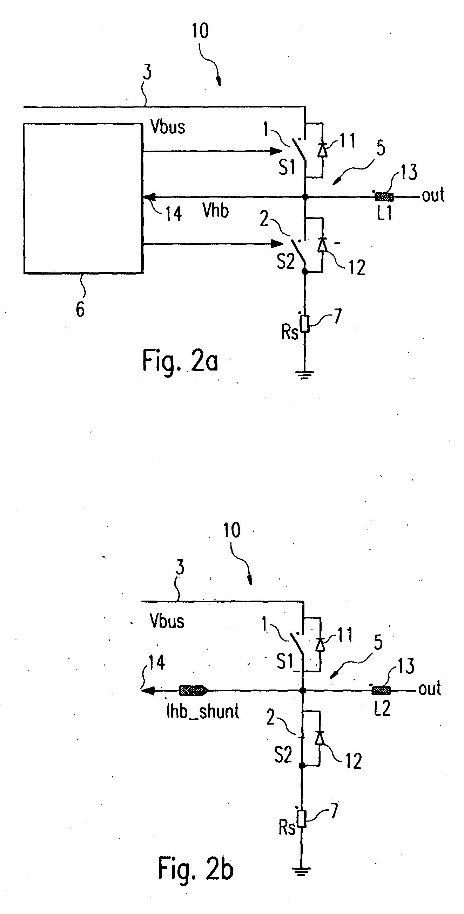

Fig. 2a und 2b zeigt ein zweites Ausführungsbeispiel der Erfindung, bei dem die überwachte Schaltung insofern vereinfacht ist, als das Meßsignal direkt an dem Mittenpunkt 4 abgegriffen wird. Wiederum erfolgt wie in Fig. 2a ersichtlich die Messung der Mittenpunktspannung während der Totzeit, während der also beide Schalter 1, 2 geöffnet sind und die Messung des Stroms durch die Halbbrücke während der zeitlichen Dauer der Taktung der Schalter 1, 2 während der der potentialniedrigere Schalter 2 geschlossen ist.

Die Vereinfachung der Schaltung gemäß Figuren 2a und 2b gegenüber der Schaltung gemäß Figuren 1a, 1b stellt dabei einen Kompromiß dahingehend dar, dass der Schalterwiderstand des Schalters S2 (Resistₒₙ) nur sehr grob bekannt ist, so dass die Strommessung in dem Zustand von Fig. 2b verhältnismäßig ungenau ist. Indessen ist die Genauigkeit bei entsprechender Einstellung eines Schwellenwerts in der Steuerschaltung 6 ausreichend, um eine Sicherheitsabschaltung im Falle einer Überstromerkennung in der Halbbrücke zu veranlassen.

Alternativ kann der Schalter S2 auch als integrierte Schaltung ausgebildet sein, wobei in diesem Fall der Schaltwiderstand im geschlossenen Zustand (Resistₒₙ) verhältnismäßig genau definiert ist und somit auch die Strommessung im Beispiel von Fig. 2b genauer erfolgen kann.

Die Erfassung des Halbbrückenstroms kann indessen nicht nur zu einer Sicherheitsabschaltung für den Fall der Erfassung eines Überstromzustands, sondern auch als zumindest ein Parameter einer Lampenleistungsregelung dienen.

Gemäß der Erfindung kann also die Pin-Anzahl des Steuer-ICs 6 gering gehalten werden, da ein Meßkonzept vorgeschlagen wird, dass schaltungstechnisch die Erfassung der Mittenpunktspannung mit der Überstromdetektion in der Halbbrücke kombiniert.

Da die Mittenpunkspannung immer bestimmt wird, bevor der entsprechende Transistor eingeschaltet wird und andererseits stets eine Totzeit vorhanden ist, wird im stromlosen Zustand gemessen, was eine additive Überlagerung von Halbbrückenstrom und Mittenpunktspannungserfassung ermöglicht.

## Patentansprüche

1. Verfahren zur Ansteuerung eines Wechselrichters mit einer Halbbrückenschaltung, die zwei in Serie geschaltete und mit Gleichspannung (3) versorgte Schalter (1, 2) aufweist, an deren Mittenpunkt (4) bei entsprechender gegenläufiger Taktung der Schalter (1, 2) eine Wechselspannung bereitgestellt wird, wobei ein an dem Mittenpunkt (4) abgegriffenes Messignal in einer zeitlichen Phase der Taktung der Schalter (1, 2), in der zumindest der potentialniedrigere Schalter (2) offen ist, als Spannungswert des Mittenpunkts ausgewertet wird, **dadurch gekennzeichnet dass** die Totzeit, in der beide Schalter (1, 2) geöffnet sind, abhängig von der erfassten Mittenpunktspannung variiert wird.

2. Verfahren nach Anspruch 1,
**dadurch gekennzeichnet,**
**dass** das Mittenpunktsignal als Strom durch die Halbbrücke (5) ausgewertet wird, wenn nur der auf niedrigerem Potential liegende Schalter (1) geschlossen ist.

3. Verfahren nach Anspruch 1 oder 2
**dadurch gekennzeichnet,**
**dass** das Mittenpunktsignal als Spannungswert des Mittenpunkts in einer Totzeit ausgewertet wird, in der beide Schalter (1, 2) geöffnet sind.

4. Verfahren nach einem der Ansprüche 1 bis 3,
wobei der potentialniedrigere Schalter (2) mittels eines Ohm'schen Messwiderstands (7) mit Masse verbunden ist, dessen Widerstandswert wesentlich kleiner als der Schalterwiderstand im geschlossenen Zustand ist, und ein weiterer Ohm'scher Widerstand (8) parallel zu dem potentialniedrigeren Schalter (2) geschaltet ist, **dadurch gekennzeichnet,**
**dass** das Mittenpunktsignal an einem Punkt zwischen dem Messwiderstand (7) und dem potentialniedrigeren Schalter (2) abgriffen wird.

5. Verfahren nach Anspruch 4,
**dadurch gekennzeichnet**
**dass** das Messignal mit einer Referenzspannung verglichen wird.

6. Verfahren nach einem der Ansprüche 1 bis 5,
**dadurch gekennzeichnet,**
**dass** die Spannung an dem Mittenpunkt zur Sicherstellung spannungsloser Schaltvorgänge der Schalter (1, 2) ausgewertet wird.

7. Verfahren nach Anspruch 6,
**dadurch gekennzeichnet,**
**dass** ein Schalter (1, 2) erst dann geschlossen wird, wenn die Erfassung der Mittenpunktspannung ergeben hat,
**dass** die Freilaufphase des Halbbrückenstroms beendet ist.

8. Wechselrichter mit einer Halbbrückenschaltung, aufweisend:
- zwei in Serie geschaltete und mit Gleichspannung (3) versorgte Schalter (1, 2), an deren Mittenpunkt (4) bei entsprechender gegenläufiger Taktung der Schalter (1, 2) eine Wechselspannung bereitgestellt wird, und
- eine Steuereinheit (6), die die Schalter (1, 2) taktet und die die Mittenpunktspannung in der zeitlichen Phase der Taktung der Schalter (1, 2), in der zumindest der potentialniedrigere Schalter (2) offen ist, mißt, **dadurch gekennzeichnet, dass** die Steuereinheit (6) die Totzeit, in der beide Schalter (1, 2) geöffnet sind, abhängig von der erfassten Mittenpunktspannung einstellt.

9. Wechselrichter nach Anspruch 8,
wobei die Steuereinheit (6) das an dem Mittenpunkt (4) abgegriffene Messignal in einer Totzeit, in der beide Schalter (1, 2) geöffnet sind, als Spannungswert des Mittenpunkts auswertet.

10. Wechselrichter nach Anspruch 8 oder 9,
wobei die Steuereinheit (6) das an dem Mittenpunkt (4) abgegriffenes Messignal in unterschiedlichen zeitlichen Phasen der Taktung der Schalter (1, 2) zur Erfassung des Stroms durch die Halbbrücke (5) bzw. der Spannung an dem Mittenpunkt (4) auswertet.

11. Wechselrichter nach Anspruch 10,
wobei die Erfassung des Stroms durch die Halbbrücke (5) durch Messung des Stroms durch die Halbbrücke (5) erfolgt und insbesondere zur Erfassung eines Überstrom-Zustands und zur Lampenleistungsregelung verwendet werden.

12. Wechselrichter nach Anspruch 11,
**dadurch gekennzeichnet,**
**dass** die Steuereinheit (6) das Mittenpunktsignal als Spannungswert des Mittenpunkts in einer Totzeit auswertet, in der beide Schalter (1, 2) geöffnet sind.

## Claims

1. Method for controlling an inverter with a half-bridge circuit having two series-connected switches (1, 2) supplied with a DC voltage (3), whose centre point (4) is provided with an alternating voltage during a corresponding contrary clocking of the switches (1, 2), wherein a measuring signal that is tapped at the centre point (4) in a temporal phase of the clocking of the switches (1, 2), when at least the lower potential switch (2) is open, is evaluated as the voltage value of the centre point, **characterised in that** the dead time, when both switches (1, 2) are open, is varied as a function of the detected centre point voltage.

2. Method according to claim 1, **characterised in that** the centre point signal is evaluated as the current through the half bridge (5) when only the lower potential switch (1) is closed.

3. Method of claim 1 or 2 **characterised in that** the centre point signal is evaluated as a voltage value of the centre point during dead time when both switches (1, 2) are open.

4. Method according to any one of the claims 1 to 3, wherein the lower potential switch (2) is earthed by means of an ohmic measuring resistor (7), whose resistance value is substantially lower than the resistance of the switch in the closed state, while a further ohmic resistor (8) is connected in parallel to the lower potential switch (2), **characterised in that** the centre point signal is tapped at a point between the measuring resistor (7) and the lower potential switch (2).

5. Method according to claim 4, **characterised in that** the measuring signal is compared with a reference voltage.

6. Method according to any one of the claims 1 to 5, **characterised in that** the voltage at the centre point is evaluated in order to ensure voltage-free switching of the switch (1, 2).

7. Method according to claim 6, **characterised in that** a switch (1, 2) is closed only when the centre point voltage has been detected, and the free-running phase of the half-bridge current is terminated.

8. Inverter with a half-bridge circuit, comprising:
- two series-connected (3) switches (1, 2) supplied with a DC voltage, at whose centre point (4) an alternating voltage is provided during corresponding contrary clocking of the switches (1, 2), and
- a control unit (6) which clocks the switches (1, 2) and measures the centre point voltage in the temporal phase of the clocking of the switch (1, 2), wherein at least the lower potential switch (2) is open, **characterised in that** the control unit (6) adjusts the dead time as a function of the detected centre point voltage when both switches (1, 2) are open.

9. Inverter according to claim 8, wherein the control unit (6) evaluates the measuring signal tapped at the centre point (4) as the voltage value of the centre point during a dead time when both switches (1, 2) are open.

10. Inverter according to claim 8 or 9, wherein the control unit (6) evaluates the measurement signal tapped at the centre point (4) at various temporal phases of the clocking of the switch (1, 2) in order to detect the current through the half bridge (5) and the voltage at the centre point (4).

11. Inverter according to claim 10, wherein the detection of the current through the half bridge (5) is effected by measuring the current through the half bridge (5) and is used in particular to detect an over-current condition and to control the lamp power.

12. Inverter according to claim 11, **characterised in that** the control unit (6) evaluates the centre point signal as a voltage value of the centre point during a dead time when both switches (1, 2) are open.

## Revendications

1. Procédé de commande d'un convertisseur avec un circuit en demi-pont qui comprend deux interrupteurs (1, 2) branchés en série et alimentés en tension continue (3), au centre duquel (4), lors d'un cadencement opposé correspondant des interrupteurs (1, 2), est générée une tension alternative, un signal de mesure pris au niveau du centre (4) dans une phase temporelle du cadencement des interrupteurs (1, 2), dans laquelle au moins l'interrupteur (2) dont le potentiel est le plus bas est ouvert, est analysé somme une valeur de tension du centre, **caractérisé en ce que** le temps mort pendant lequel les deux interrupteurs (1, 2) sont ouverts varie en fonction de la tension centrale mesurée.

2. Procédé selon la revendication 1
**caractérisé en ce que**
le signal central est analysé comme un courant à travers le demi-pont (5) lorsque seul l'interrupteur (1) se trouvant au potentiel le plus bas est fermé.

3. Procédé selon la revendication 1 ou 2
**caractérisé en ce que**
le signal central est analysé comme une valeur de tension du centre pendant un temps mort pendant lequel les deux interrupteurs (1, 2) sont ouverts.

4. Procédé selon l'une des revendications 1 à 3, l'interrupteur ayant le potentiel le plus bas (2) étant relié avec la masse au moyen d'une résistance de mesure ohmique (7) dont la valeur de résistance est nettement inférieure à la résistance de l'interrupteur dans l'état fermé et une résistance ohmique (8) supplémentaire étant branchée en parallèle à l'interrupteur ayant le potentiel le plus bas (2),
**caractérisé en ce que**
le signal central est pris au niveau d'un point entre la résistance de mesure (7) et l'interrupteur ayant le potentiel le plus bas (2).

5. Procédé selon la revendication 4
**caractérisé en ce que**
le signal de mesure est comparé à une tension de référence.

6. Procédé selon l'une des revendications 1 à 5,
**caractérisé en ce que**
la tension au niveau du centre est analysée pour la garantie de processus de commutation des interrupteurs (1, 2).

7. Procédé selon la revendication 6
**caractérisé en ce que**
un interrupteur (1, 2) n'est fermé que lorsque la mesure de la tension centrale a permis de déterminer que la phase de roue libre du courant de demi-pont est terminée.

8. Convertisseur avec un circuit à demi-pont, comprenant :
- deux interrupteurs (1, 2) branchés en série et alimentés avec une tension continue (3), au centre desquels (4), lors d'un cadencement opposé correspondant des interrupteurs (1, 2), une tension alternative est générée et
- une unité de commande (6) qui cadence les interrupteurs (1, 2) et qui mesure la tension centrale pendant la phase temporelle du cadencement des interrupteurs (1, 2) pendant laquelle au moins l'interrupteur ayant le potentiel le plus bas (2) est ouvert, **caractérisé en ce que** l'unité de commande (6) ajuste le temps mort pendant lequel les deux interrupteurs (1, 2) sont ouverts en fonction de la tension centrale mesurée.

9. Convertisseur selon la revendication 8,
l'unité de commande (6) analysant le signal de mesure pris au niveau du point central (4) pendant un temps mort pendant lequel les deux interrupteurs (1, 2) sont ouverts, comme une valeur de tension du point central.

10. Convertisseur selon la revendication 8 ou 9,
l'unité de commande (6) analysant le signal de mesure pris au niveau du point central (4) pendant différentes phases temporelles du cadencement des interrupteurs (1, 2) pour la mesure du courant à travers le demi-pont (5) ou de la tension au niveau du point central (4).

11. Convertisseur selon la revendication 10,
la détermination du courant à travers le demi-pont (5) a lieu grâce à la mesure du courant à travers le demi-pont (5) et est utilisée plus particulièrement pour la détermination d'un état de surintensité et pour la régulation d'une puissance de lampe.

12. Convertisseur selon la revendication 11,
**caractérisé en ce que** l'unité de commande (6) analyse le signal central comme une valeur de tension du point central pendant un temps mort pendant lequel les deux interrupteurs (1, 2) sont ouverts.
